# EUROPÄISCHE PATENTSCHRIFT

(11) **EP 1 972 204 B1**
(45) Veröffentlichungstag und Bekanntmachung des Hinweises auf die Patenterteilung: **21.10.2009**
(21) Anmeldenummer: 08003872.2
(22) Anmeldetag: 03.03.2008
(51) Int. Cl.: A23L 1/221, A23L 1/223, A23L 1/317, A23L 1/318, A23L 1/314, A23L 1/22, B65B 25/06

(54) **Verfahren zur Aromatisierung von Fleisch**
Method for giving aroma to meat
Procédé destiné à l'aromatisation de viande

(30) Priorität: 13.03.2007 IT BZ20070013
(43) Veröffentlichungstag der Anmeldung: 24.09.2008
(73) Patentinhaber: Vontavon, Paul, 39042 Bressanone (BZ) (IT)
(72) Erfinder: Vontavon, Paul, 39042 Bressanone (BZ) (IT)
(74) Vertreter: Oberosler, Ludwig

(56) Entgegenhaltungen:
- EP-A- 0 716 813
- WO-A-20/06043297
- DE SWARTE C.: "Jambon Au Foin (Ham with Hay) Ingredients" BIGOVEN RECIPES, [Online] XP002477680 Gefunden im Internet: URL:http://www.bigoven.com/101940-Jambon-A u-Foin-(Ham-with-Hay)-recipe.html> [gefunden am 2008-04-22]
- THORN BRETT: "Smoke sparks chefs' creativity: restaurateurs get fired up about adding hot technique's complex flavor to entrees, drinks" NATION'S RESTAURANT NEWS, [Online] 10. Dezember 2007 (2007-12-10), XP002477681 Gefunden im Internet: URL:http://findarticles.com/p/articles/mi_ m3190/is_49_41/ai_n21156936/print> [gefunden am 2008-04-22]
- ANONYM: "Osterschinken in Bergheu" COJITO KOCHREZEPTE, [Online] XP002477682 Gefunden im Internet: URL:http://www.cojito.de/kochrezept_25425_ osterschinken-in-bergheu.htm> [gefunden am 2008-04-22]
- ANONYM: "Pithiviers" CULICTIONARY, [Online] XP002477683 Gefunden im Internet: URL:http://www.eddybles.com/culictionary/> [gefunden am 2008-04-22]

## Beschreibung

Aus der EP 0245185 ist der Einsatz von Gewürzkräutern, insbesondere von "Gewürzkräutern aus der Provence" und non Gewürzen während der Pökelung von Fleischwaren, insbesondere von Schaffleisch bekannt, diese Fleischwaren werden auch einer kurzen traditionellen Räucherung unterzogen.

Aus der GR 1003460 ist das Räuchern von Wildschweinfleisch mit Gewürzkräutern bekannt.

Aus EP 0716813 ist das Einreiben von Lammfleisch mit Kräutern vor der Vakuumverpackung bekannt.

Aus WO 2006/043297 ist das Bestreuen von Fleischprodukten, wie Salami und Schinken, mit Kräutern während der Trocknungsphase bekannt.

Das Herstellungsverfahren des Südtiroler Specks g.g.A. sieht die Anwendung von Gewürzkräutern wie Lorbeer, Rosmarin zusammen mit Gewürzen wie Pfeffer, Knoblauch, Koriander während der Pökelung vor während für die Räucherung, außer harzfreiem Holz auch Wacholderzweige verwendet werden.

Die Erfindung stellt sich die Aufgabe ein Verfahren zur Aromatisierung von Fleisch, insbesondere von Schweinefleisch aber auch von Wurstwaren, zu schaffen welches geeignet ist dem Fleisch intensive organoleptische Merkmale zu verleihen welche mit den Aromen der Gewürze und Gewürzkräuter welche allgemein für das Aromatisieren von Fleisch- und Wurstwaren eingesetzt werden, harmonisieren.

Zur Lösung dieser Aufgabe schlägt die Erfindung vor in mindestens einer der Aromatisierungsphasen und gegebenenfalls auch in der Reifungsphase und/oder im Verpackungsprozess, Heu, insbesondere eine Mischung von im Heu vorhandenen Wildkräutern welche auf ungedüngten und naturbelassenen Wiesen geerntet werden, anzuwenden.

Es ist bekannt dass im Heu welches auf ungedüngten, nicht bewässerten Wiesen, insbesondere im Heu auf Alm- und Bergwiesen, unterschiedliche aromatische Wildkräuter, insbesondere Kräuter, wie z.B. Wiesenkümmel (carum carvi), Johanniskraut (hypericum maculatum), Spitzwegerich (plantago lanceolata), Wiesensalbei (salvia protensis), welche ätherische Öle enthalten, aber auch eine Vielfalt von Kräuter deren Blätter, Blüten und Samen auch im getrockneten Zustand besondere Aromen verbreiten, enthalten sind. Natürlich sind diese Kräuter in unterschiedlichen Mengen, besonders auch in Abhängigkeit der Höhenlage, der klimatischen Verhältnisse, der geologischen Natur des Bodens, vorhanden; die bekanntesten und eigenartigsten dieser Kräuter sind z.B.: trisetum flavescens, phyteuma spicatum, geranium selvaticum, alchemilla monticala, alchemilla xantochlora, leontodon hispidus, lathyrus linifolius, ranunculus nemorosus agg., anthoxantum odoratum, anthriscus sylvestris, meum anthamanticum, rhinanthus minor, phyteuma nigrum, crepis mollis RL2, rumex acetosa, trifolium pratense, veronica chamaedris, festuca rubra, leucanthemum vulgare, holcus mollis, poa chaixii, anemone nemorosa und andere. Es ist bekannt dass das Aroma welches sich aus der Mischung dieser Kräuter ergibt besonders auch für die sogenannten Heubäder geschätzt wird weil es einen beruhigenden und heilfördernden Effekt hat. Natürlich erfüllt das für das erfindungsgemäße Verfahren verwendete Heu die selben biologischen, anbau-, ernte- und konservierungstechnischen Anforderungen welche an das Heu für Heubäder, bzw. an Kräuter für Tee und Aufgüsse gestellt werden.

Erfindungsgemäß wird das Fleisch in einer Pökellake gepökelt welche auf bekannte Art angerichtet wurde z.B. mit bekannten Gewürzen und Gewürzkräutern, im Falle von Schweinefleisch, z.B. zur Speckherstellung, dauert diese Phase ca. 14 Tage. Anschließend an diese Phase schlägt die Erfindung den Einsatz von Heu in langer oder in geschnittener Form vor welches vorteilhafterweise in Schichten zwischen den Fleischstücken mit oder ohne traditionelle Pökellake gegeben wird. Während dieser Phase welche ca. 7 bis 14 Tage, je nach Größe und Dicke der Fleischstücke, bzw. je nach prozentuellem Fettgehalt und je nach der Intensität des Aromas des Heues, dauern kann, können die Aromastoffe des Heues in das Fleisch eindringen weil die vom Salz eingeleitete Entwässerung im Wesentlichen abgeschlossen ist.
Das auf diese Weise präparierte Fleisch kann eventuell bereits als, mit Heu aromatisiertes, Pökelfleisch angeboten werden.

Die Erfindung umfasst weiters dass das Fleisch auf traditionelle Art als Hackfleisch in Wurst gefüllt wird und dass diese Würste anschließend die selben Bearbeitungsphasen erfahren welche für das obgenannte gepökelte und mit Heu aromatisierte Fleisch vorgesehen sind.

Wenn das Fleisch für die Konservierung durch Räuchern, wie z.B. bei der Speckherstellung, bestimmt ist, wird es einer Trocknung von ca. 7 Tagen in Frischluft unterzogen und anschließend auf bekannte Art geräuchert oder mit Heu geräuchert wodurch ein besonderes Räucheraroma und eine besondere Räucherfärbung erzeugt wird. Aufgrund der Ausformung und Größe der Fleischstücke, bzw. je nach gewünschter Intensität des Räucheraromas, kann die Räucherung sich über 5 bis 10 Tage erstrecken. Die erfindungsgemäße Räucherung mit Heu erfolgt ohne Flamme, indem gegebenenfalls das Heu leicht angefeuchtet ist und auf bekannte Art der Rauchdurchzug innerhalb der Räucherzellen genutzt wird. Die selbe erfindungsgemäße Räucherung ist eventuell auch für Wurstwaren anwendbar.

Nach der Räucherung erfolgt, insbesondere bei der Speckherstellung, eine weitere Trocknungsphase, Reifungsphase und Lagerungsphase welche, z.B. für den Speck, 4 bis 7 Monate dauert.
Erfindungsgemäß kann das Fleisch auch während dieser Phase dem Aroma von Heu ausgesetzt sein indem z.B. mindestens die Seite welche keine Schwarte aufweist mit einer Heuschicht in Berührung ist wobei diese von einem bekannten elastischen Netz oder Strumpf festgehalten wird, ohne jedoch auszuschließen dass das Heu frei innerhalb der Lagerzellen ausgelegt wird.

Nach Abschluss der Reifung kann das Produkt verpackt werden indem die vom elastischen Netz oder Strumpf festgehaltene, bereits vorhandene Heuschicht beibehalten oder eine frische Heuschicht vorgesehen wird und indem es vakuumverpackt oder, zusammen mit Heu, in geflochtene oder in andere bekannte Behälter verpackt wird; auf diese Weise wird erreicht, dass das Heu-Aroma anhaltend, auch während der Lagerzeiten eindringen kann.
Im Falle von Wurstwaren welche nach dem erfindungsgemäßen Verfahren hergestellt worden sind, können auch diese so verpackt werden dass sie mit einer aromatisierenden Heuschicht in Kontakt sind.

Das erfindungsgemäße Verfahren ist, sei es für entbeintes Fleisch in Stücken, als auch für Wurstwaren, geeignet. Das Fleisch kann, ohne weitere Verarbeitung, nach der Aromatisierung durch Heu anschließend an die bekannte Pökelung oder nach der anschließenden Trocknung, nach der Räucherung oder nach der anschließenden Reifung, in den Verkauf gebracht werden.
Die Wurstwaren können nach erfolgter Räucherung mit Heu oder nach der anschließenden Reife und Lagerung mit oder ohne Einsatz von Heu in den Verkauf gebracht werden.
Die Aromatisierung durch Heu kann erfindungsgemäß während nur einer, während mehrerer oder während sämtlicher der folgenden Arbeitsphasen erfolgen: Pökelung, Räucherung, Reife/Lagerung, Abpackung.

Die Erfindung wird anschließend anhand eines, in der beigelegten Zeichnung schematisch dargestellten, erfindungsgemäßen Aromatisierungsverfahrens näher erklärt, dabei erfüllt das Verfahrensschema rein erklärenden, nicht begrenzenden, Zweck.

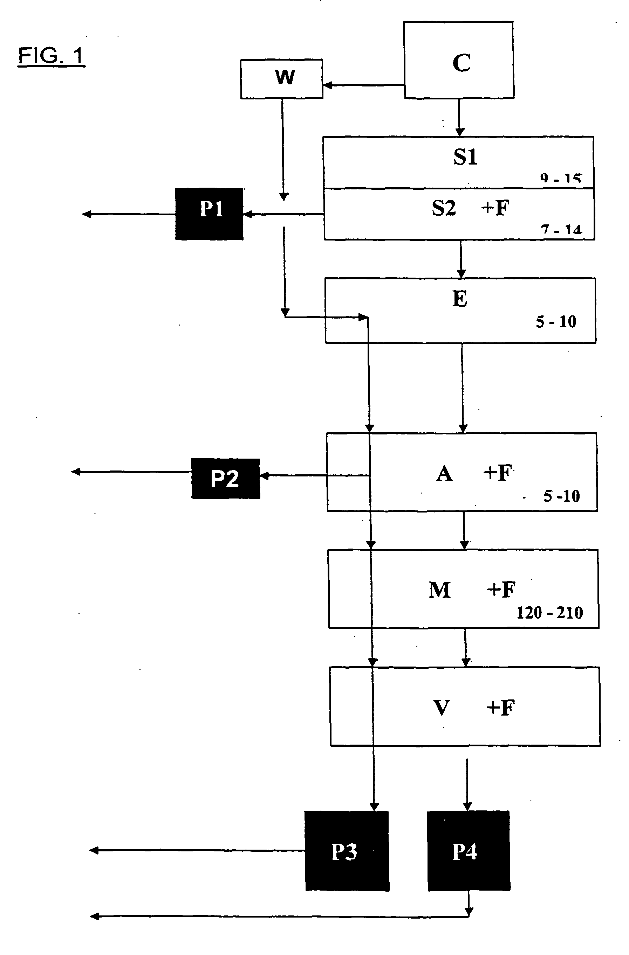

Die Fig. 1 Ist ein Schema welches im Wesentlichen das erfindungsgemäße Verfahren zur Herstellung von, durch Heu aromatisiertes Fleisch, durch Heu aromatisierte Wurstwaren und durch Heu aromatisierten Speck, zeigt.

In dem in Fig. 1 gezeigten Schema ist die Aromatisierung durch Heu während der einzelnen Herstellungsphasen mit +F gekennzeichnet; die besagte Aromatisierung ist in der zweiten Pökelphase S2, in der Räucherphase A, in der Reife- und Lagerphase M und in der Abpackphase V, angezeigt. Erfindungsgemäß kann jedoch die Aromatisierung durch Heu +F nur während einer, während mehrerer oder während aller der vorgenannten Phasen S2. A, M, V erfolgen.

Das Fleisch C, z.B. knochenfreies Schweinefleisch in Stücken, wird gesalzen und in dichte Behälter zusammen mit Gewürzen und Gewürzkräutern eingelagert um einen ersten Pökelungsprozess S1 mit der Dauer von ca. 9 bis 15 Tagen zu erfahren. Diese bekannte Phase dient unter anderem um eine Entwässerung des Fleisches zu erreichen, dies kann auch nur durch Einsalzen erfolgen. Nach dieser ersten Pökelphase S1 wird das Fleisch, nach abtropfen der Pökellake, erneut in dichte Behälter, eventuell zusammen mit Gewürzen und Gewürzkräutern, unter Zwischenlage von Heu F, vorzugsweise in langem ungeschnittenen Zustand, eingelegt. Dadurch dass die durch das Salz bewirkte Entwässerung des Fleisches praktisch abgeschlossen ist, kann in dieser Phase das Eindringen des Aromas, insbesondere auch der Aromastoffe der im Heu enthaltenenGräsermischung, Blumen und Samen erfolgen; diese Aromatisierungsphase kann über ca. 7 bis 14 Tage dauern.

Nach Abschluss der zweiten Pökelphase S2 mit Aromatisierung durch Heu F, erhält man ein gepökeltes und mit Heu aromatisiertes Produkt welches eventuell als solches angeboten werden kann. Das gepökelte und mit Heu F aromatisierte Fleisch kann über ca. 5 bis 10 Tage einer Trocknungsphase E unterzogen werden. Erfindungsgemäß kann das Fleisch C als Hackfleisch zu Wurstwaren verarbeitet werden, diese Wurstwaren können, wie das obgenannte gepökelte und mit Heu F aromatisierte Fleisch, getrocknet E werden.

Das getrocknete Fleisch oder auch die getrockneten Wurstwaren können anschließend, z.B. über die Dauer von ca. 5 bis 10 Tagen, einer Räucherungsphase A unterzogen werden. Die Erfindung sieht vor, dass während dieser Räucherphase A für die Erzeugung von Rauch Heu F verwendet wird wodurch dem Produkt ein besonderes Aroma und eine eigene "Patina" verliehen werden. Die Erfindung schließt nicht aus, dass während der Räucherphase A auch durch Holz erzeugter Rauch verwendet wird um eine bestimmte Färbung und ein ausgeglichenes Aroma zu erzeugen. Die Räucherung A mit Anwendung von Heu F erfolgt unter Vermeidung der Bildung einer Flamme, um dies zu erreichen kann das Heu F, zwecks langsamer Verkohlung mit intensiver Raucherzeugung, angefeuchtet und einer Wärmequelle ausgesetzt werden.

Eventuell können die Wurstwaren P2, nach der Räucherung A, auch als solche angeboten werden; zwecks Herstellung eines hochwertigeren Produktes mit intensiverem Geschmack und längerer Haltbarkeit, kann das Fleisch und/oder können die Wurstwaren einer anschließenden Reife- und Lagerungsphase M unterzogen werden während welcher sie eine weitere Aromatisierung mit Heu F erfahren können. Das Heu F kann während dieser Phase in direkter Berührung mit den Produkten sein indem das Heu, z.B. mittels bekannter elastischer Netze oder Strümpfe, an das Produkt angeschmiegt wird ohne auszuschließen, dass das Heu F frei in den Lagerzellen, ohne direkten Kontakt mit dem Fleisch, ausgelegt sein kann und dem, innerhalb der Zellen erzeugtem Luftstrom, ausgesetzt sein kann.

Nach Abschluss der Reife- und Lagerungsphase M welche sich, insbesondere bei Herstellung von Speck, über eine Dauer von ca. 120 bis 210 Tagen erstreckt, kann das Produkt, z.B. unter Vakuum in transparenter Kunststofffolie, zusammen mit einer Heuschicht F, abgepackt V werden. Als Endprodukte werden mit Heu aromatisierte, geräucherte und gereifte Wurstwaren P3 erzeugt, bzw. wird mit Heu aromatisiertes, geräuchertes und gereiftes Fleisch P4, z.B. mit Heu aromatisierter Speck, erzeugt. Beide diese Produkte P3 und P4 zeichnen sind durch das intensive, von der Mischung der im Heu enthaltenen Wildkräutern erzeugte, Aroma und durch die beträchtliche Reife und Lagerzeit aus.

## Patentansprüche

1. Verfahren zur Aromatisierung von Fleisch (C) während einer oder mehrerer bekannter Bearbeitungsphasen, **dadurch gekennzeichnet, dass** als aromatisierendes Mittel unbehandeltes Heu (F) welches eine Mischung aromatischer Wildkräuter enthält eingesetzt wird, wobei das Heu während einer oder mehrerer der folgenden Bearbeitungsphasen: letzte Phase der Pökelung (S2), Reife- und Lagerphase (M), Abpackphase (V), mit dem entbeinten Fleisch in Stücken, in Berührung steht und dass das selbe Verfahren für die Aromatisierung von Wurstwaren nutzbar ist.

2. Verfahren gemäß Anspruch 1, **dadurch gekennzeichnet, dass** während der letzten Phase der Pökelung (S2) das Heu (F), mit oder ohne Gewürze und/oder Gewürzkräuter, zwischen die abgetropften von Pökellake freien Fleischstücke gelegt wird.

3. Verfahren gemäß Anspruch 1, **dadurch gekennzeichnet, dass** das Fleisch (C) oder die Wurstwaren (P2) einer Räucherung (A) unterzogen werden wobei der gesamte Rauch oder Teil des Rauches von gegebenenfalls angefeuchtetem Heu erzeugt wird welches derart einer Wärmequelle ausgesetzt wird dass sich keine Flamme bildet.

4. Verfahren gemäß Anspruch 1, **dadurch gekennzeichnet, dass** das Heu (F) während der Reife- und Lagerungsphase (M) zusammen mit dem Fleisch und/oder den Wurstwaren im selben Raum gelagert ist.

5. Verfahren gemäß Anspruch 1, **dadurch gekennzeichnet, dass** in der Reife- und Lagerungsphase (M) das Heu in unmittelbarer Berührung mit dem Fleisch und/oder mit den Wurstwaren steht indem es von bekannten elastischen Netzen oder Strümpfen festgehalten wird.

6. Verfahren gemäß Anspruch 1, **dadurch gekennzeichnet, dass** in der Abpackphase (V) das Heu (F) in unmittelbarer Berührung mit dem Fleisch und/oder mit den Wurstwaren steht indem es von der Vakuumverpackung, von bekannten geflochtenen oder ähnlichen Verpackungen oder von einem elastischen Netz oder Strumpf festgehalten wird.

## Claims

1. Method for flavouring meat (C) during one or more known processing phases, **characterized in that** the flavouring agent used is untreated hay (F) which contains a mixture of aromatic wild herbs, wherein the hay stands in contact with the deboned meat in pieces during one or more of the following processing phases: last phase of pickling (S2), ripening and storage phase (M), packaging phase (V) and **in that** the same method is useable for flavouring sausage products.

2. Method according to Claim 1, **characterized in that**, during the last phase of pickling (S2), the hay (F) is placed, with or without spices and/or herbs, between the meat pieces which are drained free of pickling brine.

3. Method according to Claim 1, **characterized in that** the meat (C) or the sausage products (P2) are subjected to a smoking (A), wherein all of the smoke or some of the smoke is generated from optionally moistened hay which is exposed to a heat source in such a manner that no flame forms.

4. Method according to Claim 1, **characterized in that** the hay (F), during the ripening and storage phase (M), is stored together with the meat and/or sausage products in the same room.

5. Method according to Claim 1, **characterized in that**, in the ripening and storage phase (M), the hay stands in direct contact with the meat and/or with the sausage products by being retained by known elastic nets or stockings.

6. Method according to Claim 1, **characterized in that**, in the packaging phase (V), the hay (F) stands in direct contact with the meat and/or with the sausage products by being retained by the vacuum packaging, by known braided or similar packaging, or by an elastic net or stocking.

## Revendications

1. Procédé destiné à l'aromatisation de viande (C) pendant une ou plusieurs phase de traitement connues, **caractérisé en ce qu'**est utilisé comme produit aromatisant du foin (F) non traité, contenant un mélange d'herbes sauvages aromatiques, sachant que le foin, pendant une ou plusieurs des phases de traitement suivantes : dernière phase de salage (S2), phase de maturation et stockage (M), phase d'emballage (V), est mis en contact avec la viande désossée en morceaux, et **en ce que** le même procédé est utilisable pour l'aromatisation de produits de charcuterie.

2. Procédé selon la revendication 1, **caractérisé en ce que**, pendant la dernière phase du salage (S2), le foin (F), avec ou sans épices et/ou herbes aromatiques, est placé entre les morceaux de viande égouttés, exempts de saumure.

3. Procédé selon la revendication 1, **caractérisé en ce que** la viande (C) ou les produits de charcuterie (P2) sont soumis à un fumage (A), l'ensemble de la fumée, ou une partie de la fumée, étant produite par du foin, le cas échéant humidifié, formant de cette manière une source de chaleur, et **en ce qu'**aucune flamme ne se forme.

4. Procédé selon la revendication 1, **caractérisé en ce que**, pendant la phase de maturation et stockage (M), le foin est stocké dans le même local, conjointement avec la viande et/ou les produits de charcuterie.

5. Procédé selon la revendication 1, **caractérisé en ce que**, pendant la phase de maturation et stockage (M), le foin est en contact direct avec la viande et/ou les produits de charcuterie, tandis qu'il est maintenu fixé par des filets ou gaines élastiques connu(e)s.

6. Procédé selon la revendication 1, **caractérisé en ce que**, dans la phase d'emballage (V), le foin est en contact direct avec la viande et/ou avec les produits de charcuterie, tandis qu'il est maintenu fixé par l'emballage sous vide, par des emballages connus tressés ou analogues, ou par un filet ou gaine élastique.
